# EUROPÄISCHE PATENTSCHRIFT

(11) **EP 0 779 784 B1**
(45) Veröffentlichungstag und Bekanntmachung des Hinweises auf die Patenterteilung: **23.12.1998**
(21) Anmeldenummer: 95924314.8
(22) Anmeldetag: 22.06.1995
(51) Int. Cl.: A41H 37/00

(54) **VORRICHTUNG ZUM ANSETZEN VON NIETEN, KNÖPFEN ODER DERGLEICHEN**
DEVICE FOR FITTING RIVETS, BUTTONS OR THE LIKE
DISPOSITIF DE MISE EN PLACE DE RIVETS, BOUTONS OU SIMILAIRE

(30) Priorität: 08.09.1994 DE 4431948
(43) Veröffentlichungstag der Anmeldung: 25.06.1997
(73) Patentinhaber: William Prym GmbH & Co. KG, 52224 Stolberg (DE)
(72) Erfinder: KOCHS, Karl-Josef, D-52499 Baesweiler (DE); KOPATZ, Heinz-Dieter, D-52477 Alsdorf (DE)
(74) Vertreter: Grundmann, Dirk, Dr.
(86) Internationale Anmeldenummer: EP9502434
(87) Internationale Veröffentlichungsnummer: WO9607338

(56) Entgegenhaltungen:
- EP-A- 0 208 317
- EP-A- 0 222 595
- WO-A-93/12680
- DE-A- 3 313 351

## Beschreibung

Die Erfindung betrifft eine Vorrichtung zum Ansetzen von Nieten, Knöpfen oder dergleichen, welche aus einem Artikel-Unterteil und einem Artikel-Oberteil bestehen, an eine Textilie oder dergleichen, mit einem als Widerlager für das Artikel-Unterteil dienenden Unterwerkzeug und einem den Niethub ausführenden Stößel, dessen unteres Ende ein das Artikel-Oberteil beaufschlagendes Oberwerkzeug ausbildet und dessen oberes Ende zusammenwirkt mit einer die Hubbewegung steuernden, drehangetriebenen Kurvenscheibe, und mit einer in Bewegungsrichtung des Stößels verlagerbaren Haltezange, welche zur Ausbildung einer Fingerschutzfunktion nach einer ersten Absenkbewegung in einer Abstandsstellung zum Unterwerkzeug stehenbleibt, wobei während dieser ersten Absenkbewegung ein elektrischer Schalter aktiviert ist, dessen Betätigung bei Nichterreichen der Abstandsstellung die Vorrichtung stillsetzt und welcher Schalter nach Erreichen der Abstandsstellung die nachfolgende zweite Absenkbewegung der Haltezange erlaubt.

Eine Vorrichtung der in Rede stehenden Art ist bekannt aus der DE 33 13 351 C2, wobei auf der Antriebswelle eines Motors axial hintereinanderliegend eine Nockenscheibe und eine Kurvenscheibe aufgekeilt sind. Gegen die Umfangsfläche der Nockenscheibe tritt federbelastet das obere Ende eines Stößels, während in die breitflächenseitige Laufbahn der Kurvenscheibe eine Laufrolle eines aus Oberstange und Unterstange bestehenden Gestänges eingreift. Die Unterstange ist Träger der Haltezange. An der Oberstange greift eine Zugfeder an, die die Laufrolle in Anlagestellung zur Innenfläche der Laufbahn belastet. Eine weitere Zugfeder wirkt im Sinne eines Auseinanderspreizens der Oberstange und Unterstange. Beide tragen je einen Kontakt eines Schalters, welche Kontakte durch die eine Zugfeder in Anlagestellung gehalten werden. Durch Einschalten des Motors werden sowohl der Stößel als auch die Haltezange in Abwärtsrichtung verlagert. Kann die Haltezange nicht bis zu ihrer ersten Abstandsstellung abwärts fahren, also nicht den Fingerschutzabstand einhalten, so bleibt die Haltezange mit der Unterstange stehen, während sich die Oberstange kurvengesteuert weiter abwärts bewegt. Die Kontakte des Schalters öffnen daraufhin und setzen augenblicklich den Antrieb still. Wird dagegen der Fingerschutzabstand eingehalten, wird der Abtrieb nicht unterbrochen.

Dem Gegenstand der Erfindung liegt die Aufgabe zugrunde, eine Vorrichtung der in Rede stehenden Art unter Beibehaltung der bewährten Grundform und eines sicheren Funktionsablaufes einfacher, verschleißunanfälliger und kostengünstiger auszugestalten.

Gelöst ist diese Aufagbe bei einer Vorrichtung mit den Merkmalen des Anspruchs 1, wobei darauf abgestellt ist, daß der zwischen einer ersten und einer zweiten Absenkbewegung für eine kurze Zeit stehenbleibende Stößel die Haltezange auf ihrem gesamten Abwärtsweg bewegungsidentisch mitschleppt, wobei die Haltezange in einem einseitigen Freigang gegenüber dem Stößel gegen die Kraft einer Feder mit dem Stößel gekuppelt ist, welche Feder einhergehend mit einer Relativbewegung zwischen Stößel und Zange und einer Schalterbetätigung entweder beim Aufsetzen der Haltezange auf die Textilie oder beim Auslösen der Fingerschutzfunktion gespannt wird.

Zufolge derartiger Ausgestaltung ist eine Vorrichtung zum Ansetzen von Nieten, Knöpfen oder dergleichen von besonders einfachem Aufbau und hoher Zuverlässigkeit angegeben. Aufgrund der während ihres Abwärtshubes bewegungsidentisch vom Stößel mitgeschleppten Haltezange genügt zum Antrieb sowohl des Stößels als auch der Haltezange ausschließlich eine einzige Nockenscheibe bzw. Kurvenscheibe. Es ist dabei ein einseitiger Freigang der Haltezange auf dem Stößel vorgesehen derart, daß die Haltezange nach Aufsetzen auf die Textilie bzw. beim Auslösen der Fingerschutzfunktion stehenbleibt, während sich der Stößel weiter in Abwärtsrichtung verlagert. Diese Relativbewegung führt zu einer Schalterbetätigung, woraufhin unverzüglich der Antrieb der Vorrichtung bei Nichteinhalten des Fingerschutzabstandes stillsetzt. Der dabei auf die Haltezange wirkende Federdruck ist so gewählt, daß beispielsweise bei Beaufschlagung eines Fingers keine Verletzungen an demselben erzeugt werden. Die Anzahl der Bauteile für den Antrieb und die Fingerschutzfunktion können gering gehalten werden, verbunden mit einer kostengünstigen Herstellung der Vorrichtung. Auch ergibt sich eine verschleißarme Ausgestaltung und damit eine hohe Zuverlässigkeit, insbesondere im Hinblick auf die Fingerschutzfunktion. Auch kann der an sich bewährte Aufbau entsprechender Vorrichtungen beibehalten werden. Hat die Haltezange ihre erste Abstandsstellung zum Unterwerkzeug erreicht, wird der Antrieb fortgesetzt und Artikel-Oberteil und Artikel-Unterteil unter Zwischenlage der Textilie miteinander verbunden. Die bewegungsidentische Mitnahme der Haltezange vom Stößel gestattet es ferner auf einfachste Weise, die Haltezange für einen kurzen Moment beim Erreichen der Abstandsstellung anzuhalten. Dies geschieht dadurch, daß der Stößel stehenbleibt und diesen Stillstand demgemäß auf die Haltezange überträgt. Der Stillstand für einen kurzen Moment läßt sich dabei durch entsprechende Gestaltung der Kurvenbahn der Nokkenscheibe verwirklichen.

Eine vorteilhafte Weiterbildung der Vorrichtung zeichnet sich dadurch aus, daß die Kontakte des als Unterbrecher ausgebildeten Schalters einerseits der Haltezange und andererseits dem Stößel zugeordnet sind. Sobald die Haltezange während ihres Abwärtshubes stehenbleibt, tritt die vorerwähnte Relativverschiebung zwischen Haltezange und Stößel auf, so daß die diesen zugeordneten Kontakte des Schalters öffnen und demgemäß den Antrieb im Falle des Nichteinhaltens des Fingerschutzabstandes stillsetzen.

Zu einer raumsparenden Ausgestaltung trägt die Tatsache bei, daß die Feder als den Stößel umgebende Schraubendruckfeder ausgebildet ist. Deren eines Ende setzt auf die Haltezange auf, während das andere Ende sich an einer Radialschulter des Stößels abstützt.

Ein ausreichend groß bemessener Stillstand des Stößels und der Haltezange wird dadurch erreicht, daß die zwischen den beiden Absenkbewegungen vorgesehene Abstandsstellung sich über ca. 30° bei einer 360°-Drehung pro Bewegungszyklus der Kurvenscheibe erstreckt.

Ferner ist hervorzuheben, einen maschinengestellseitigen Überbrückungsschalter vorzusehen, welcher vom Stößel zu Beginn der zweiten Absenkbewegung betätigt ist. Wird der Stößelantrieb nach Erreichen der ersten Abstandsstellung fortgesetzt, folgt einhergehend die Betätigung des maschinengestellseitigen Überbrückungsschalters über eine stößelseitige Steuerkurve, so daß auch nach Aufsetzen der Haltezange auf die Textilie und Relativverlagerung des Stößels zur Haltezange verbunden mit dem Öffnen des diesen Teilen zugeordneten Schalters der Überbrückungsschalter den Stromkreis zum Motor aufrecht erhält und der Arbeitsablauf der Maschine fortgesetzt werden kann.

Weiterhin ergibt sich eine bauliche Vereinfachung der Vorrichtung dadurch, eine von der Stößelbewegung abgegriffene Schieberverlagerung eines Ladeschiebers vorzusehen. Dieser ist mit einem Unter- und einem Oberschieber bestückt zum Einschieben sowohl eines Artikel-Unter-teils als auch eines Artikel-Oberteils in die ihnen zugeordneten Werkzeuge.

Baulich einfach erweist es sich dabei, daß die Schieberverlagerung mittels eines Hebels erfolgt, welcher in einem Kulissenschlitz einen Kulissenstein führt, der seinerseits in einer maschinengestellseitigen Schlittenführung verlagerbar ist.

Eine weitere Funktion erfüllt der vorgenannte Hebel dadurch, daß die Hebelverschwenkung die Drehbewegung eines Steuerhebels für eine Unterwerkzeugverlagerung steuert, wobei ein Arm eines Übertragungshebels eine Steuerkurve des Steuerhebels abtastet. Die Unterwerkzeugverlagerung wird dazu ausgenutzt, eine dem Stößel entgegengerichtete Bewegung auszuführen, die dazu dient, das Artikel-Unterteil, welches beispielsweise Zacken ausbildet, mit den Zacken durch die Textilie zu stoßen, um danach ein Widerlager während des Nietvorganges darzustellen.

Hierbei erweist es sich als vorteilhaft, daß die Aufwärtsbewegung des Unterwerkzeuges etwa mit dem Aufsetzen der Zange auf die Textilie einsetzt und vor dem Erreichen der untersten Stellung des Stößels beendet ist. Somit stellt die Haltezange das Widerlager beim Durchstoßen der Textilie mittels des Artikel-Unterteils dar. Sodann ist hervorzuheben, daß der Aufwärtsbewegung des Unterwerkzeugs etwa zeitgleich mit dem Stillstehen von Haltezange und Stößel eine Aufwärtspositionierbewegung des Unterwerkzeugs vorgeordnet ist.

Damit während des Nietprozesses über die benötigte Nietkraft hinausgehende Kräfte zu keiner Beschädigung der Vorrichtung führen, ist das Unterwerkzeug nach unten über den Übertragungshebel abgefedert.

Schließlich besteht ein vorteilhaftes Merkmal noch darin, daß die Haltezange mit einem Gleitstück axial verschieblich auf dem Stößel sitzt. Es ist also keine zusätzliche Führung für die Haltezange vorzusehen, indem der Stößel die Führungsfunktion für das Gleitstück der Haltezange übernimmt.

Nachstehend wird ein Ausführungsbeispiel der Erfindung anhand der Zeichnungen erläutert. Es zeigt:
- Fig. 1: teils in Seitenansicht , teils im Horizontalschnitt die Vorrichtung in der oberen Totpunktstellung des Stößels,
- Fig. 2: einen Ausschnitt der Vorrichtung im Bereich des Unterwerkzeuges und des Oberwerkzeuges, ebenfalls in der oberen Totpunktstellung des Stößels,
- Fig. 3: eine Frontansicht der Fig. 1, wobei die Magazine dargestellt sind,
- Fig. 4: teils in Frontansicht, teils im vertikalen Längsschnitt die Vorrichtung gemäß der oberen Totpunktstellung des Stößels,
- Fig. 5: eine der Fig. 1 entsprechende Darstellung, wobei sich Haltezange und Stößel in Abwärtsrichtung verlagert haben bei sich zwischen Haltezange und Textilie erstreckendem Finger einer Bedienungsperson,
- Fig. 6: die entsprechende Ausschnittsvergrößerung in dieser Stellung,
- Fig. 7: die Frontansicht der Vorrichtung gemäß dieser Position der Haltezange,
- Fig. 8: die Herausvergrößerung der Frontansicht im Bereich der Werkzeuge, ebenfalls mit sich zwischen Haltezange und Unterwerkzeug erstrekkendem Finger,
- Fig. 9: eine der Fig. 1 analoge Darstellung nach durchgeführter erster Absenkbewegung der Haltezange unter Erreichen der Abstandsstellung zum Unterwerkzeug,
- Fig. 10: zu Fig. 9 die Herausvergrößerung der Abstandsstellung der Haltezange zum Unterwerkzeug,
- Fig. 11: eine der Fig. 3 entsprechende Darstellung, wobei die Haltezange ihre Fingerschutz-Abstandsstellung erreicht hat,
- Fig. 12: die Herausvergrößerung der Fig. 11 im Bereich der Werkzeuge,
- Fig. 13: die der Fig. 1 entsprechende Darstellung, jedoch mit die Nietstellung einnehmenden Werkzeugen,
- Fig. 14: die Herausvergrößerung der Fig. 13 im Bereich der Werkzeuge,
- Fig. 15: die Frontansicht der Vorrichtung, teilweise geschnitten, in der Nietstellung,
- Fig. 16: die zugehörige Herausvergrößerung der Fig. 15 im Bereich der Werkzeuge und
- Fig. 17: ein Bewegungsdiagramm des Stößels, der Haltezange und des Unterwerkzeuges.

Die in Form einer Maschine ausgebildete Vorrichtung besitzt einen von einer Fußplatte 1 getragenen, vertikal ausgerichteten Ständer 2. Letzterer ist Träger einer Montageplatte 3. Diese weist eine entgegen Uhrzeigerrichtung um 90° gekippte U-Form auf, deren unterer U-Schenkel einen Ausleger 4 darstellt. An seinem freien Ende haltert dieser ein Unterwerkzeug 5. Letzteres besitzt einen im Querschnitt kreisförmigen Amboß 6, dessen oberes Ende ein Artikel-Unterteil 7 aufnimmt. Aufbewahrt sind die Artikel-Unterteile 7 in einem seitlich der Montageplatte 3 angeordneten Magazin 8, von welchem schräg in Richtung des Auslegers 4 abwärts gerichtet eine Teile-Zuführungsschiene 9 ausgeht. Bezüglich der Artikel-Unterteile 7 handelt es sich um mit Zacken versehene Halteteile, die mit zwei verschiedenen Artikel-Oberteilen in Verbindung bringbar sind. Das eine Artikel-Oberteil 10 ist dargestellt. Es dient als Funktionsteil und ist mit dem Artikel-Unterteil 7 an eine Textilie 11 ansetzbar. Beide unterschiedlich gestalteten Artikel-Oberteile gelangen aus dem Magazin 8 gegenüberliegenden Magazinen 12, 13 über eine gemeinsame TeileZuführungsschiene 14 in den Bereich eines Ladeschiebers 15. Dieser ist horizontal verlagerbar und mit einer oberen Einschubleiste 16 und einer unteren Einschubleiste 17 versehen. Die obere Einschubleiste bringt jeweils ein Artikel-Oberteil 10 in eine Haltezange 18, während die untere Einschubleiste 17 die Artikel-Unterteile 7 in fluchtende Lage zum Amboß 6 des Unterwerkzeugs 5 bewegt. Mittels einer nicht veranschaulichten Elektromagnet-Steuerung können entweder die einen oder anderen Artikel-Oberteile 10 in den Bewegungsbereich der oberen Einschubleiste 16 gebracht werden.

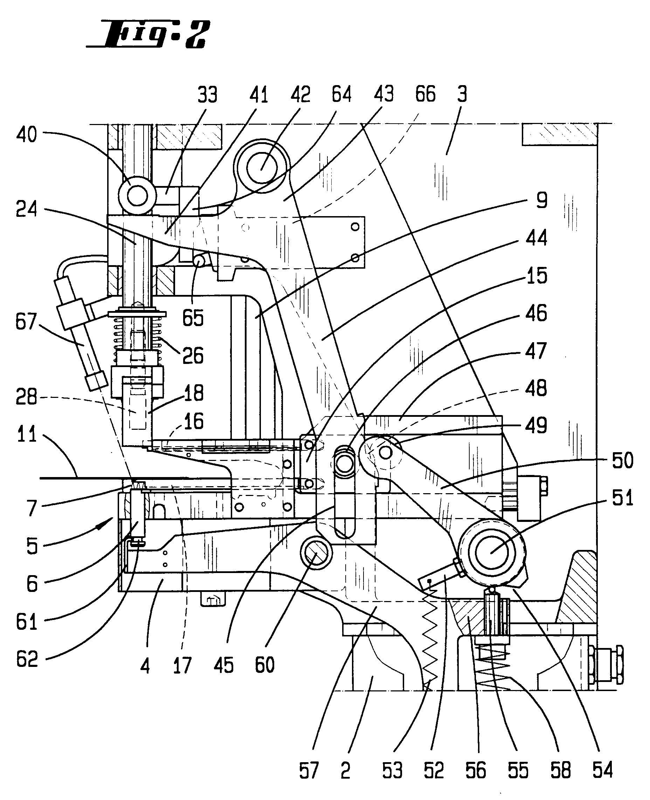

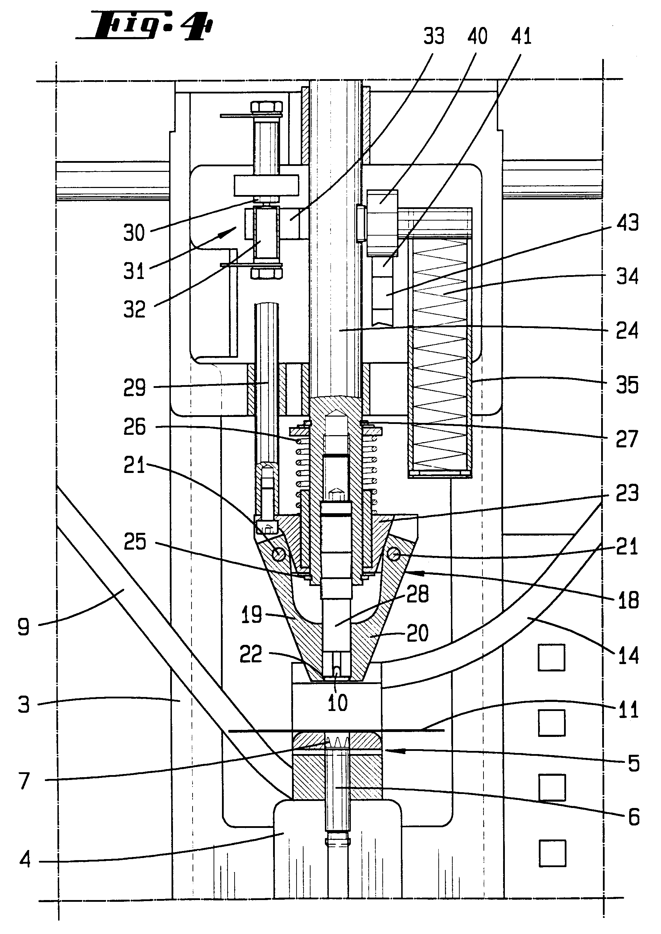

Die Haltezange 18 erstreckt sich in der Ausgangsstellung der Vorrichtung in fluchtender Gegenüberlage zum Unterwerkzeug 6. Gebildet wird die Haltezange 18 von zwei Zangenbacken 19, 20, die an ihren oberen Enden um Zapfen 21 verlagerbar sind. Eine nicht dargestellte Zugfeder belastet die Zangenbacken 19, 20 gegeneinander. An ihrem unteren Ende formen die Zangenbacken 19, 20 eine Aufnahme 22 für ein Artikel-Oberteil 10. In diese Aufnahme 22 wird das Artikel-Oberteil mittels der oberen Einschubleiste 16 eingebracht. Getragen sind die Zapfen 21 und damit die Haltezange 18 von einem Gleitstück 23, welches auf dem unteren Ende eines sich in Gegenüberlage zum Unterwerkzeug 5 erstreckenden Stößels 24 geführt ist. Die Abwärtsbewegung des Gleitstückes 23 ist durch eine Radialschulter 25 am unteren Ende des Stößels 24 begrenzt. Eine oberhalb des Gleitstückes 23 den Stößel 24 umgebende Schraubendruckfeder 26 belastet die Haltezange 18 in Abwärtsrichtung. Das obere Ende der Schraubendruckfeder 26 stützt sich ebenfalls an einer Radialschulter 27 des Stößels 24, welche Radialschulter mit Abstand zur unteren Radialschulter 25 angeordnet ist. Die Schraubendruckfeder 26 dient als Fingerschutzfeder und verhindert, daß bei Aufsetzen der Haltezange beispielsweise auf einen sich zwischen dieser und dem Unterwerkzeug erstreckenden Finger eine Verletzung desselben durch die Haltezange erfolgt. An seinem unteren Ende trägt der Stößel 24 ein Oberwerkzeug 28, welches in der oberen Totpunktstellung des Stößels gemäß Fig. 1-4 oberhalb der Aufnahme 22 für das Artikel-Oberteil 10 endet.

Das Gleitstück 23 trägt ferner eine es überragende, in der Montageplatte 3 geführte Schubstange 29. Deren oberes Ende ist mit einem Kontakt 30 eines Schalters 31 bestückt. Der obere Kontakt 30 wirkt zusammen mit einem unteren Kontakt 32 des Schalters 31. In der in Fig. 1-4 angebenen oberen Totpunktstellung des Stößels 24 ist der Schalter 31 aktiviert, das bedeutet, daß beide Kontakte 30, 32 gegeneinandertreten. Der obere Kontakt 30 beinhaltet eine nicht veranschaulichte Druckfeder, die den Kontaktvorsprung in Richtung des Kontaktvorsprunges des unteren Kontaktes 32 belastet. Es ist dabei eine begrenzte Verlagerbarkeit des oberen Kontaktvorsprunges vorgesehen. Getragen ist der untere Kontakt 30 von einem am Stößel 24 befestigten Ausleger 33. In Gegenüberlage zum Kontakt 32 stützt sich an dem Ausleger 33 eine Druckfeder 34 ab, die ihrerseits in einer maschinengestellseitigen Hülse 35 abgeordnet ist.

Am oberen Ende trägt der Stößel 24 eine Laufrolle 36. Unter der Wirkung der Druckfeder 34 tritt die Laufrolle 36 gegen die umfangsseitige Lauffläche einer Kurvenscheibe 37. Aufgekeilt ist diese auf der Antriebswelle 38 eines elektromotorischen Antriebes 39. Während einer 360°-Drehung der Kurvenscheibe 37 wird demgemäß der Stößel 24 in Abwärtsrichtung und wieder in Aufwärtsrichtung bis zur oberen Totpunktstellung verlagert.

Der Ausleger 33 trägt ferner eine Steuerrolle 40. Gegen die Unterseite derselben tritt ein Arm 41 eines an der Montageplatte 3 um den Gelenkzapfen 42 gelagerten Hebels 43. In stumpfwinkliger Ausrichtung zum Arm 41 bildet der Hebel 43 einen schräg abwärts gerichteten Hebelarm 44 aus. Dessen Ende verläuft gemäß der Stellung in den Fig. 1-4 vertikal und ist dort mit einem Vertikalschlitz 45 versehen, in welchen ein Kulissenstein 46 eingreift. Der Kulissenstein 46 ist verbunden mit dem schlittenförmigen Ladeschieber 15, der seinerseits in einer maschinengestellseitigen Schlittenführung 47 beim Verschwenken des Hebels 43 verlagerbar ist. Das untere Ende des Hebelarmes 44 formt eine Steuerkante 48, an welcher sich eine Tastrolle 49 abstützt. Letztere befindet sich am freien Ende eines Steuerhebels 50. Gelagert ist dieser um einen maschinengestellseitigen Bolzen 51. An einem Querarm 52 des Steuerhebels 50 greift eine Zugfeder 53 an, die den Steuerhebel 50 in Richtung einer Anlagestellung zum Hebel 43 belastet. Einhergehend wird dieser mit seinem Arm 41 in Anlagestellung zur Steuerolle 40 des Stößels 24 gezwungen.

In Gegenüberlage zur Tastrolle 49 bildet der Steuerhebel 50 eine nahe des Bolzens 51 angeordnete Steuerkurve 54 aus, die ihrerseits zusammenwirkt mit einem verdrehungsgesicherten Tastbolzen 55, welcher in einem seitlich ausladenden Querarm 56 eines Übertragungshebels 57 geführt ist. Der Tastbolzen 55 stützt sich über eine Übertragungs-Druckfeder 58 an einem gewindeeinstellbaren Gegenbolzen 59 am unteren Ende des etwa winkelförmig gestalteten Übertragungshebels 57 ab. Im Winkelscheitel ist der Übertragungshebel 57 um einen auslegerseitigen Querzapfen 60 gelagert. Das freie Ende des Übertragungshebels 57 erstreckt sich bis unterhalb des Unterwerkzeugs 5. Mit einem Winkelstück 61 greift der Übertragungshebel 57 formschlüssig in eine Ringnut 62 am unteren Ende des amboßförmigen Unterwerkzeuges 5 ein. Eine nahe des Gegenbolzens 59 angreifende Rückstellfeder 63 belastet den Übertragungshebel 57 derart, daß dessen Tastbolzen 55 sich am Steuerhebel 50 abstützt, und zwar gemäß Fig. 1-4 im Bereich vor der Steuerkurve 54.

Der Ausleger 33 ist sodann Träger einer Steuerleiste 64, welche mit dem Taster 65 eines maschinengestellseitig festgelegten Überbrückungsschalters 66 zusammenarbeitet.

Zum genauen Ansetzen der Artikel-Teile an die Textilie dient eine Projektionslampe 67. Diese ist maschinengestellseitig festgelegt und erzeugt beispielsweise auf der Oberseite der Textilie ein Fadenkreuz.

Es stellt sich folgende Wirkungsweise ein: Gemäß Fig. 1-4 nimmt der Stößel 24 aufgrund der entsprechend gedrehten Kurvenscheibe 37 die obere Totpunktstellung ein. Von der oberen Einschubleiste ist ein Artikel-Oberteil 10 an die Haltezange 18 übergeben worden, während die untere Einschubleiste 17 das Artikel-Unterteil 7 in das Unterwerkzeug 5 eingebracht hat.

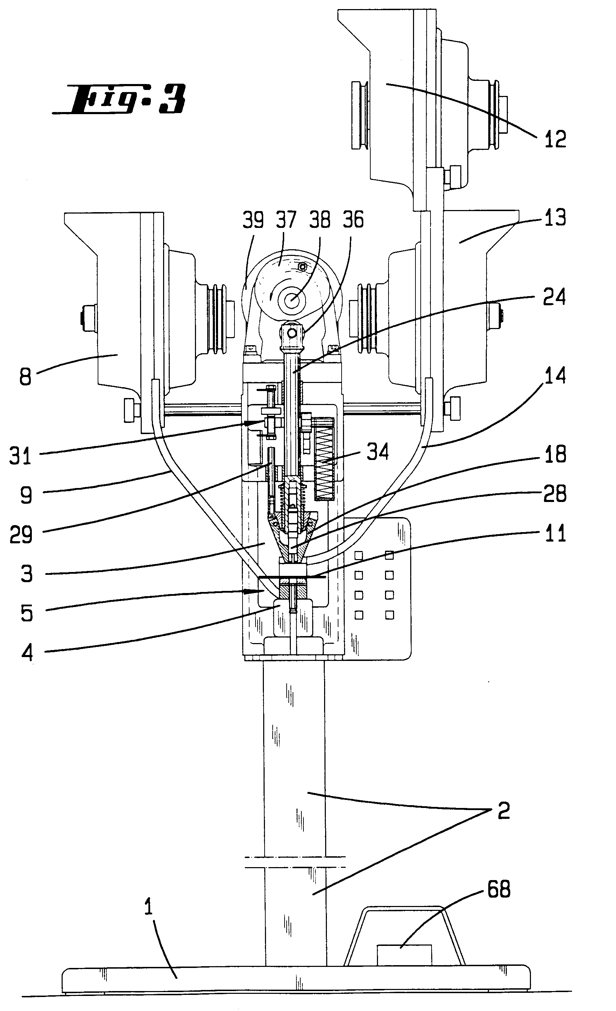

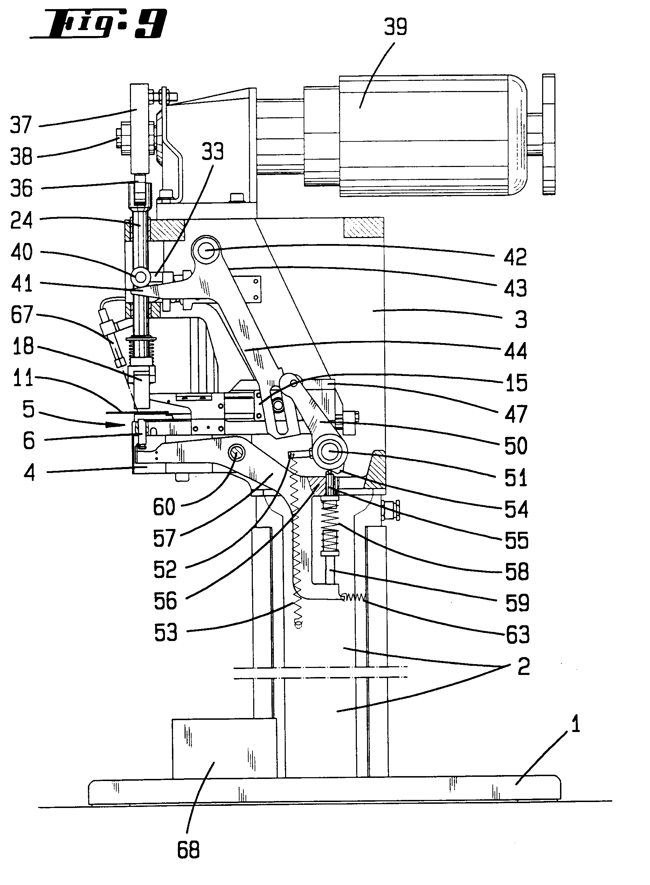

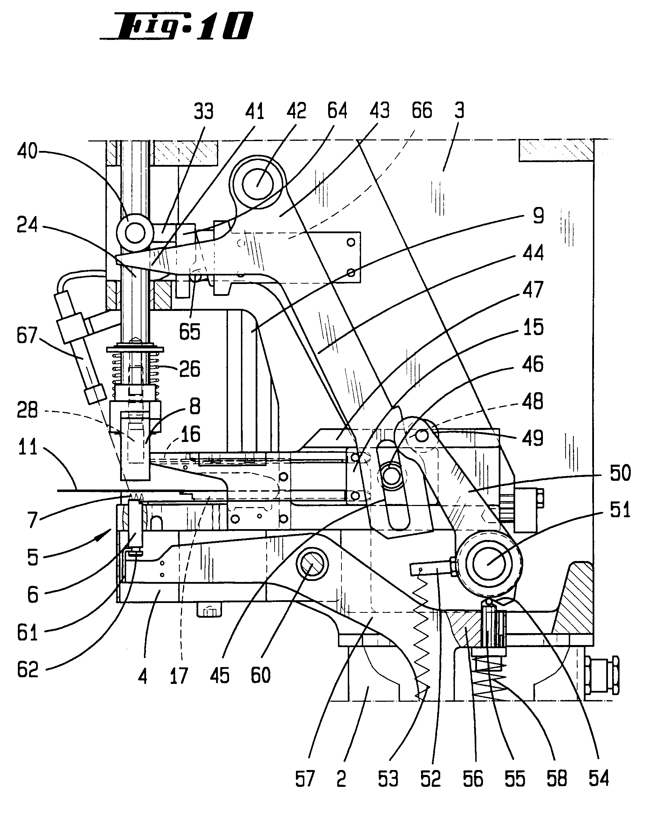

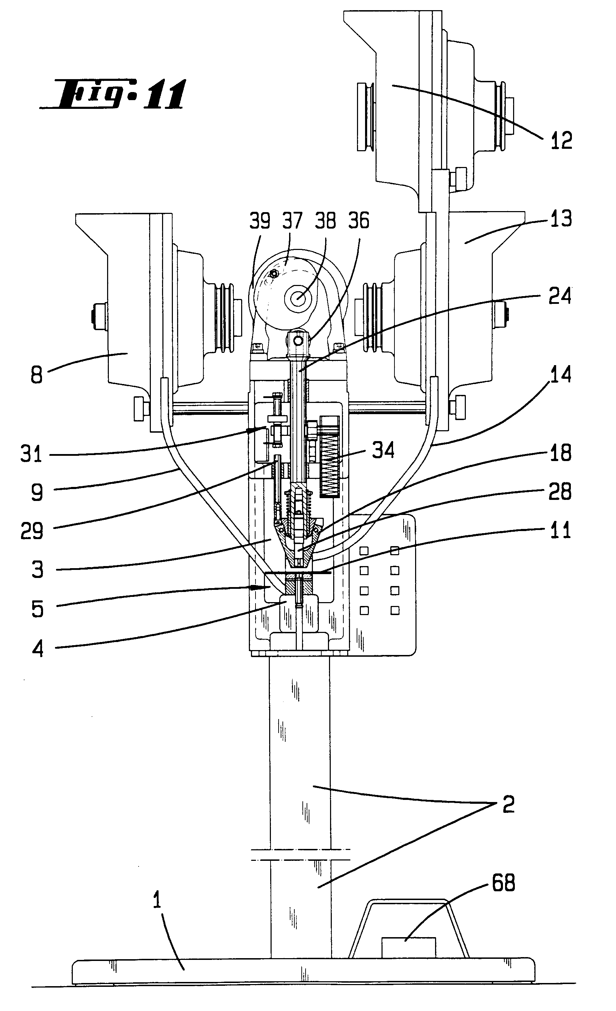

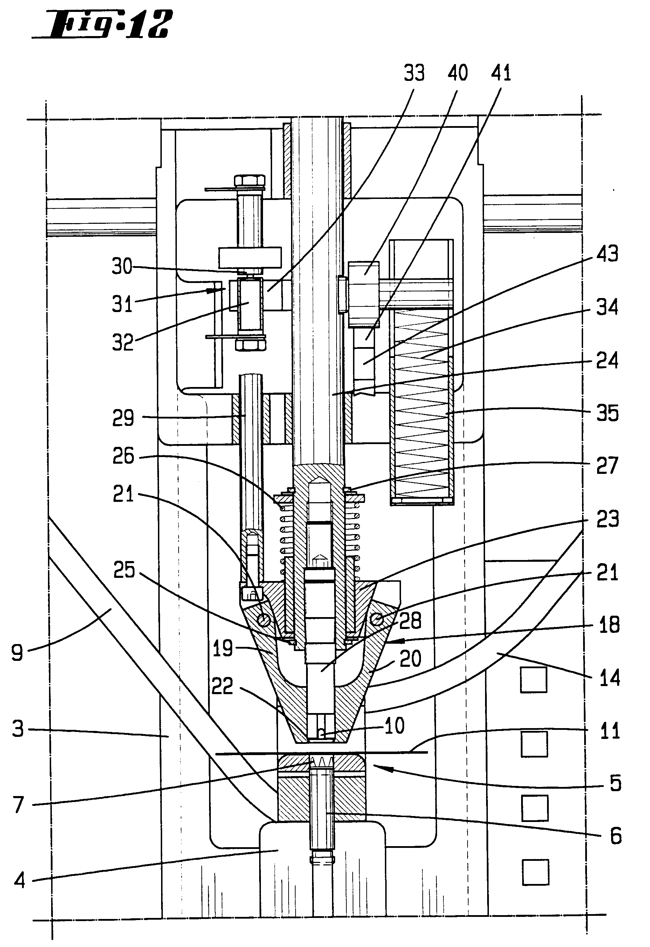

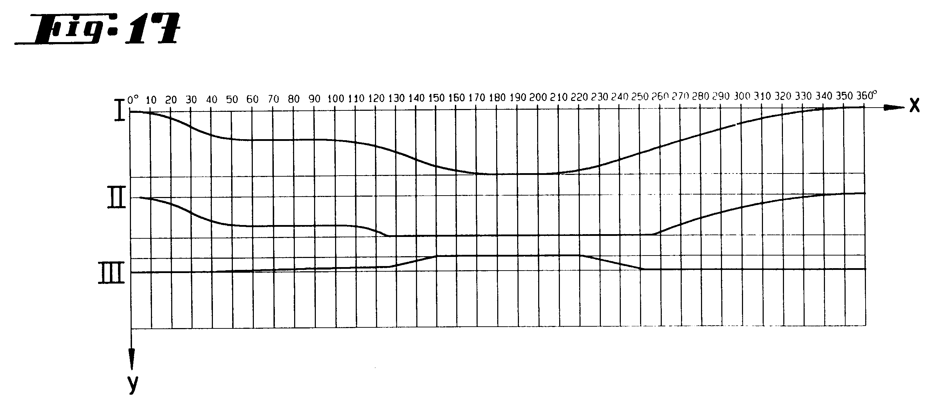

Durch Betätigung eines auf der Fußplatte 1 angeordneten Fußschalters 68 setzt der Antrieb ein verbunden mit einer Drehung der Kurvenscheibe 37 in Pfeilrichtung gemäß Fig. 3. Der Stößel 24 wird dadurch in Abwärtsrichtung verlagert. Aus dem Bewegungsdiagramm gemäß Fig. 17 geht hervor, daß der Stößel 24 (siehe Stößelkurve I) nach einer 60°-Drehung der Steuerkurve stehenbleibt. Dieser Stillstand erstreckt sich etwa bis zur 90°-Stellung der Steuerkurve 37. Bewegungsidentisch hat sich die Haltezange 18 in Abwärtsrichtung verlagert, siehe hierzu die Haltezangen-Kurve II in Fig. 17. Die Haltezange 24 befindet sich demgemäß in einer Abstandsstellung zum Unterwerkzeug 5, welcher Abstand etwa 4-5 mm entspricht und damit kleiner ist als die Dicke eines Fingers, vgl. hierzu die Fig. 9-12. Die Kontakte 30, 32 des Schalters 31 bleiben geschlossen, weil keine Relativverlagerung zwischen Haltezange und Stößel 24 stattgefunden hat.

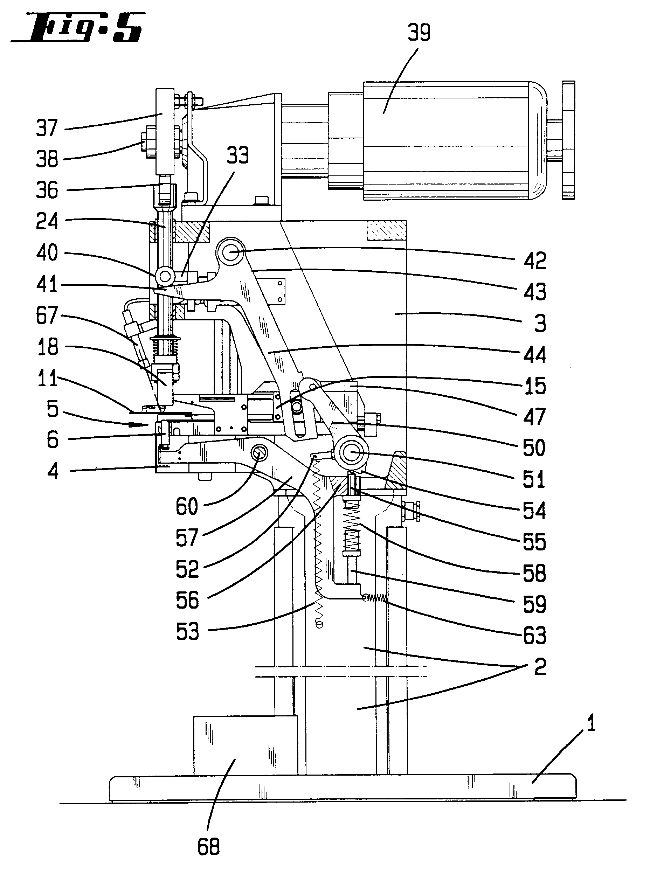

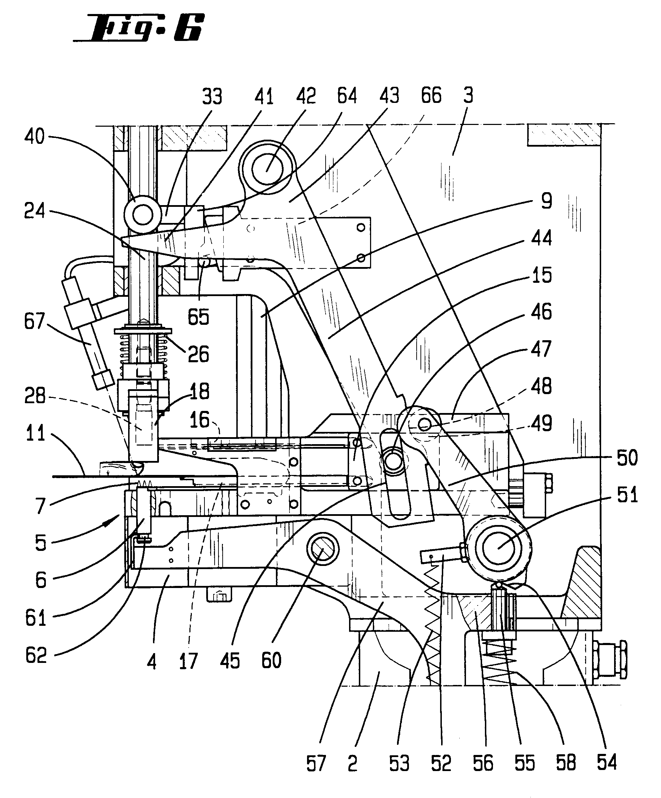

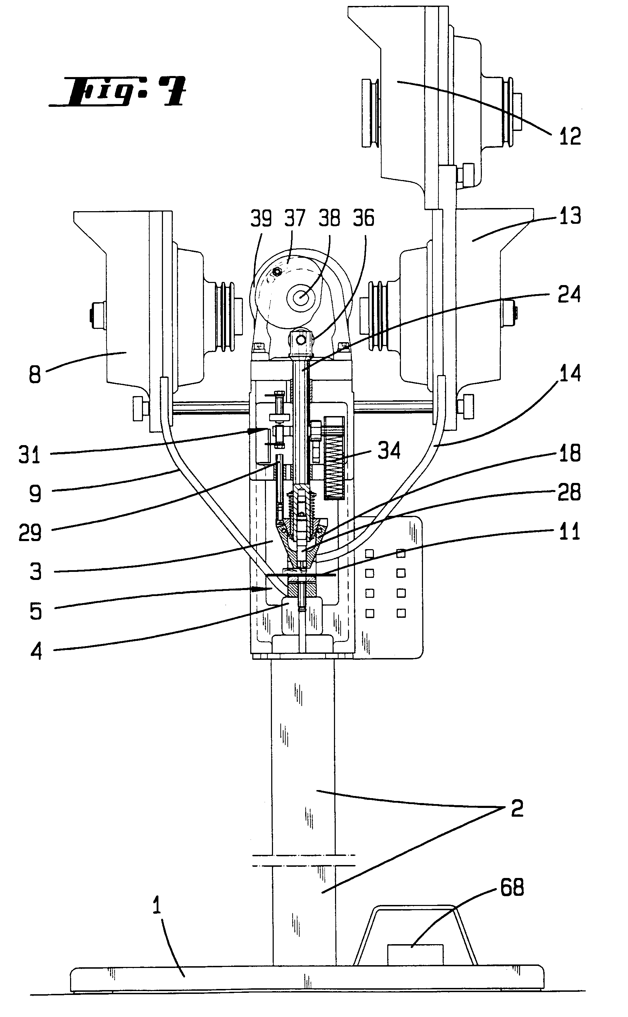

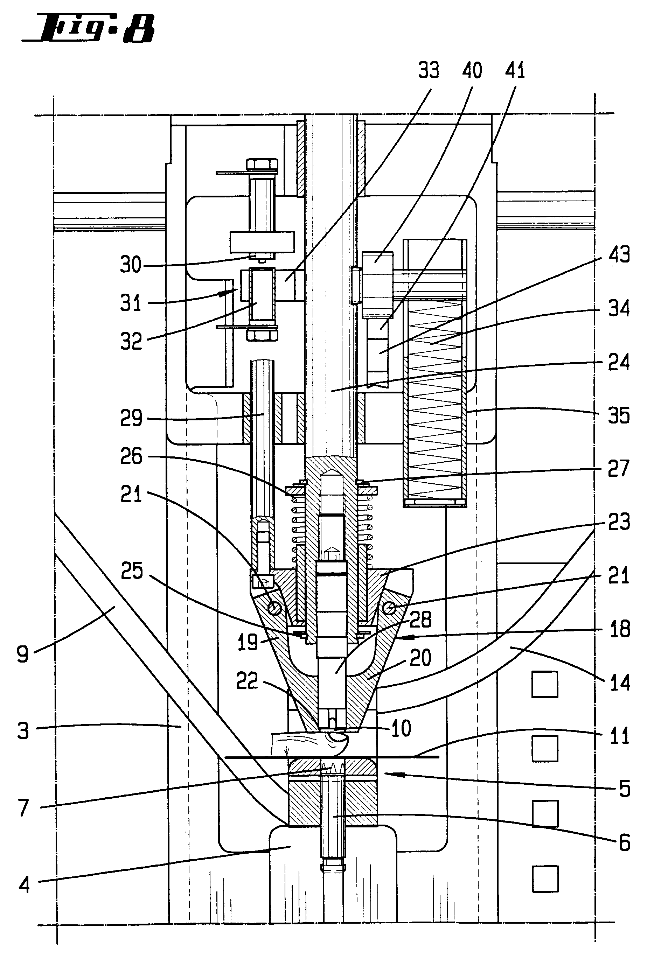

Es kann jedoch der Fall eintreten, daß sich zwischen dem Unterwerkzeug 5 und der Haltezange 18 der Finger einer Bedienungsperson erstreckt, vergleiche Fig. 5-8. Die Haltezange 18 setzt demgemäß auf dem Finger auf, bleibt stehen, während sich der Stößel 24 weiter in Abwärtsrichtung verlagert. Infolge der dann auftretenden Relativverlagerung von Stößel 24 zur Haltezange 18 öffnen die Kontakte 30, 32 des Schalters 31 und setzen unverzüglich den Antrieb still. Während dieser Relativverlagerung von Haltezange 18 und Stößel 24 wird die Schraubendruckfeder 26 nur unwesentlich gespannt, so daß keine Verletzungsgefahr für den Finger besteht.

Einhergehend mit der Abwärtsbewegung des Stößels 24 beaufschlagt die Steuerolle 40 den Arm 41 des Hebels 43 und verschwenkt diesen entgegen Uhrzeigerrichtung verbunden mit einer Mitnahme des Ladeschiebers 15 mit den daran sitzenden Einschubleisten 16, 17. Der Hebelarm 44 des Hebels 43 beaufschlagt während dieses Vorganges die Tastrolle 49 des Steuerhebels 50 und schwenkt diesen in Uhrzeigerrichtung einhergehend damit, daß der Tastbolzen gegen die Steuerkurve 54 tritt. Dadurch wird der Übertragungshebel 57 über die Übertragungsfeder 58 verschwenkt, so daß eine Aufwärtsbewegung des Unterwerkzeuges 5 etwa zeitgleich mit dem Stillstehen der Haltezange 18 und des Stößels 24 eintritt. Die Unterwerkzeug-Kurve III zeigt die Aufwärtsbewegung des Unterwerkzeugs in einem leichten Anstieg, welcher etwa bei 50° beginnt und etwa bei 130° endet, bezogen auf die Drehung der Kurvenscheibe 37.

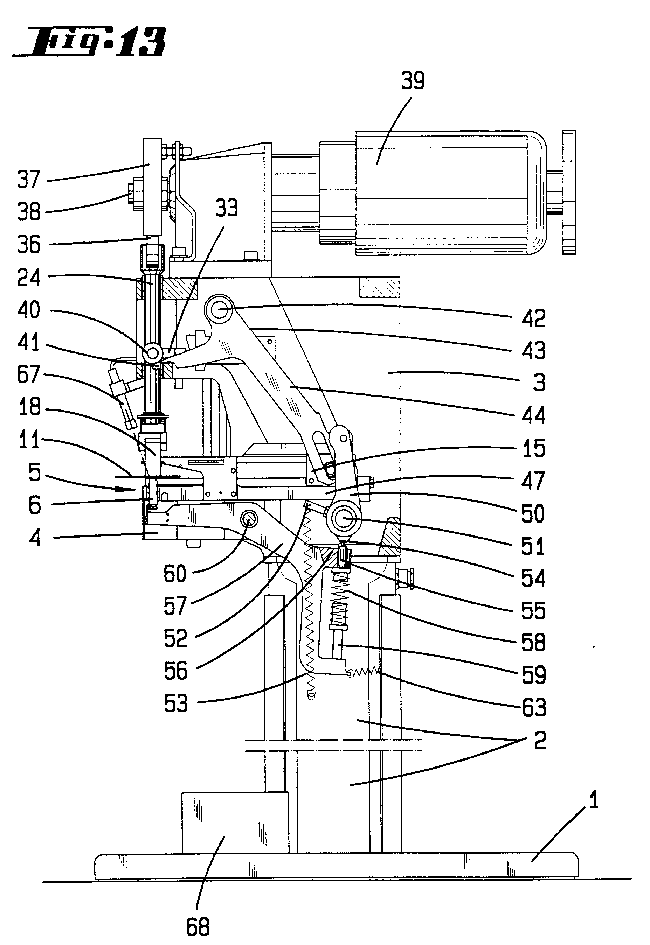

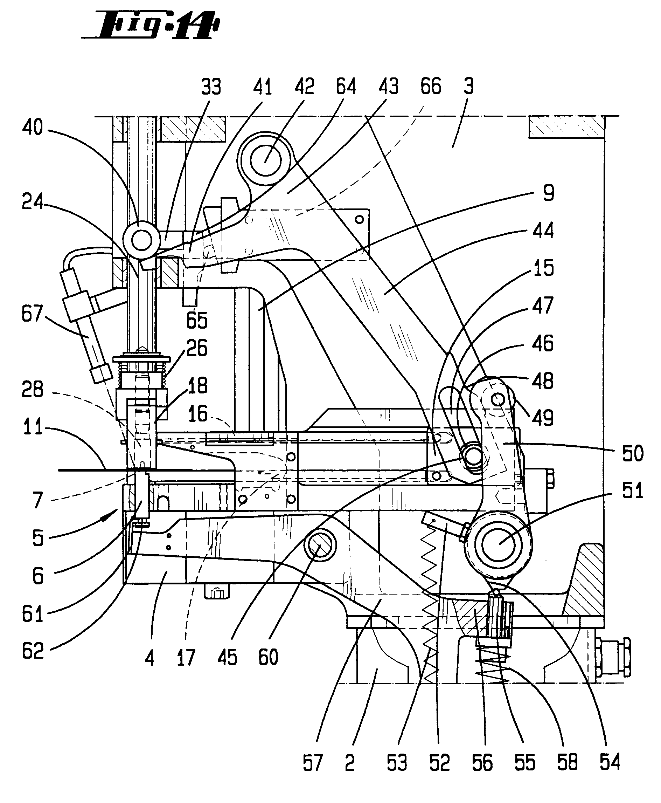

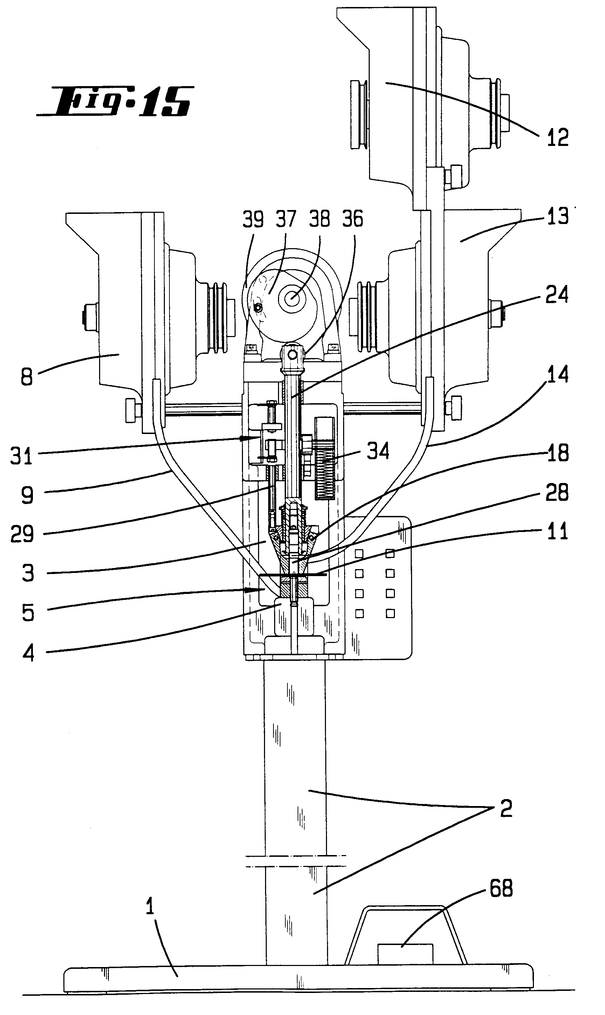

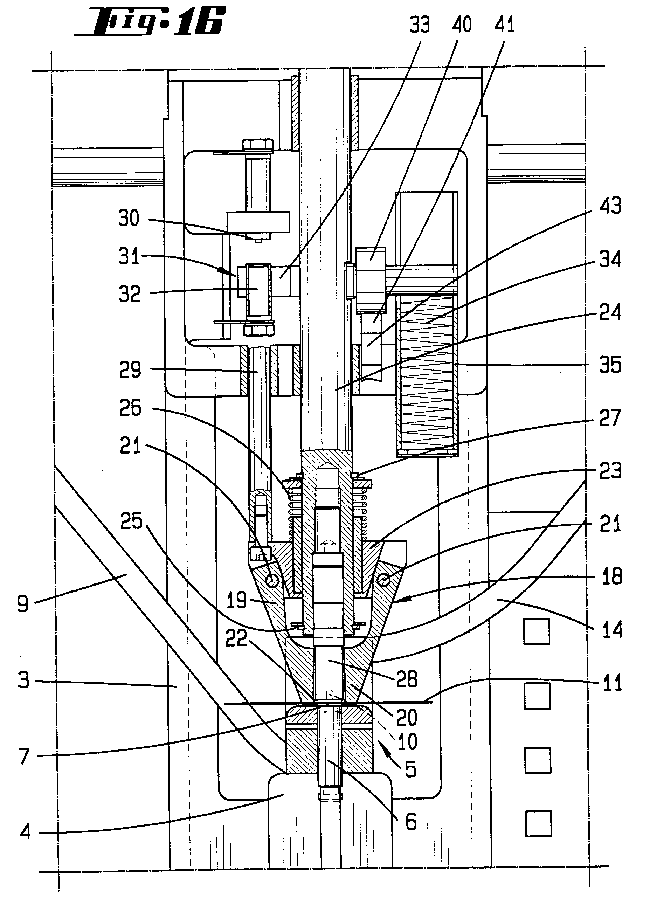

Bei Erreichen einer 90°-Drehstellung der Kurvenscheibe 37 setzt die zweite Absenkbewegung des Stößels 24 und damit der Haltezange 18 ein. Letztere setzt auf die Oberseite der Textilie 11 auf, während der Stößel 24 sich weiter in Abwärtsrichtung bewegt. Das Aufsetzen der Haltezange findet gemäß Bewegungsdiagramm etwa bei 125° statt. Der weiter sich abwärts bewegende Stößel führt zu einer Relativverlagerung zwischen Haltezange 18 und Stößel 24 verbunden mit einem Öffnen des Schalters 31. Dennoch wird der Antrieb nicht stillgesetzt, weil der maschinengestellseitige Überbrückungsschalter 66 von der Steuerleiste 64 betätigt wird. Dies geschieht vom Stößel zu Beginn der zweiten Absenkbewegung, so daß trotz geöffneter Kontakte 30, 32 des Schalters 31 der Antrieb nicht unterbrochen wird. Es findet im Bereich zwischen der 180°- bis 200° -Drehung das Vernieten des Artikel-Unterteils 7 mit dem Artikel-Oberteil 10 statt, siehe Fig. 13-16. Das Bewegungsdiagramm in Fig. 17 deutet anhand der Unterwerkzeug-Kurve III an, daß sich an die leicht ansteigende Aufwärtspositionierbewegung bis etwa 125°-Drehung der Kurvenscheibe 37 eine steil ansteigende Aufwärtsbewegung stattfindet. Die Zacken des Artikel-Unterteils 7 durchstoßen dabei die Textilie 11. Die höchste Position des Unterwerkzeugs 5 wird danach etwa über 70° bei einer 360°-Drehung der Kurvenscheibe 37 gehalten, wobei zeitgleich auch das Vernieten der Knopfteile stattfindet. In der Nietstellung hat sich ferner der Ladeschieber 15 so weit verlagert, daß die Einschubleisten 16, 17 vor den zugeführten Artikelteilen liegen und bei Fortsetzung der Drehung der Kurvenscheibe 37 in die Werkzeuge eingebracht werden. Ausgehend aus der Nietstellung bewegen sich dann auch die verschiedenen Hebel in Ihre Ausgangslage zurück, so daß danach die Ausgangsstellung gemäß Fig. 1-4 wieder vorliegt.

Es ist noch zu erwähnen, daß beim Aufsetzen der Haltezange 18 auf die Textilie 11 die Abwärtsverlagerung des Stößels 24 über das Oberwerkzeug die Abwärtsverlagerung des Artikel-Oberteils 10 erzwingt, welches über entsprechende, der Aufnahme 22 nachgeordnete Schrägen der Zangenbacken 19, 20 deren Aufspreizung entgegen Federbelastung erzwingt.

Mit der Aufwärtsbewegung des Stößels schließt ferner der Schalter 31, während der Überbrückungsschalter 66 öffnet.

## Patentansprüche

1. Vorrichtung zum Ansetzen von Nieten, Knöpfen oder dergleichen , welche aus einem Artikel-Unter- und einem Artikel-Oberteil (7, 10) bestehen, an eine Textilie oder dergleichen, mit einem als Widerlager für das Artikel-Unterteil (7) dienenden Unterwerkzeug (5) und einem den Niethub ausführenden Stößel (24), dessen unteres Ende ein das Artikel-Oberteil (10) beaufschlagendes Oberwerkzeug (28) ausgebildet und dessen oberes Ende zusammenwirkt mit einer die Hubbewegung steuernden, drehangetriebenen Kurvenscheibe und mit einer in Bewegungsrichtung des Stößels verlagerbaren Haltezange (18), welche zur Ausbildung einer Fingerschutzposition nach einer ersten Absenkbewegung in einer Abstandsstellung zum Unterwerkzeug stehenbleibt, wobei während dieser ersten Absenkbewegung ein elektrischer Schalter (31) aktiviert ist, dessen Betätigung bei Nichterreichen der Abstandsstellung die Vorrichtung stillsetzt, und wobei nach Erreichen der Abstandsstellung die nachfolgende zweite Absenkbewegung der Haltezange einsetzt, dadurch gekennzeichnet, daß der zwischen einer ersten und einer zweiten Absenkbewegung für eine kurze Zeit stehenbleibende Stößel (24)die Haltezange (18) auf ihrem gesamten Abwärtsweg bewegungsidentisch mitschleppt, wobei die Haltezange (18) in einem einseitigen Freigang gegenüber dem Stößel (24) gegen die Kraft einer Feder (26) mit dem Stößel (24) gekuppelt ist, welche Feder (26) einhergehend mit einer Relativbewegung zwischen Stößel (24) und Haltezange (18) und einer Schalterbetätigung entweder beim Aufsetzen der Haltezange (18) auf die Textilie (11) oder beim Auslösen der Fingerschutzfunktion gespannt wird.

2. Vorrichtung nach Anspruch 1, dadurch gekennzeichnet, daß die Kontakte (30, 32) des als Unterbrecher ausgebildeten Schalters (31) einerseits der Haltezange (18) und andererseits dem Stößel (24) zugeordnet sind.

3. Vorrichtung nach Anspruch 1, dadurch gekennzeichnet, daß die Feder (26) als den Stößel (24) umgebende Schraubendruckfeder ausgebildet ist.

4. Vorrichtung nach einem oder mehreren der vorhergehenden Ansprüche, dadurch gekennzeichnet, daß die zwischen den beiden Absenkbewegungen vorgesehene Abstandsstellung sich über ca. 30° bei einer 360°-Drehung pro Bewegungszyklus der Kurvenscheibe (37) erstreckt.

5. Vorrichtung nach einem oder mehreren der vorhergehenden Ansprüche, gekennzeichnet durch einen maschinengestellseitigen Überbrückungsschalter (66), welcher vom Stößel (24) zu Beginn der zweiten Absenkbewegung betätigt ist.

6. Vorrichtung nach einem oder mehreren der vorhergehenden Ansprüche, gekennzeichnet durch eine von der Stößelbewegung abgegriffene Schieberverlagerung eines Ladeschiebers (15).

7. Vorrichtung nach Anspruch 6, dadurch gekennzeichnet, daß die Schieberverlagerung mittels eines Hebels (43) erfolgt, welcher in einem Kulissenschlitz (45) einen Kulissenstein (46) führt, der seinerseits in einer maschinengestellseitigen Schlittenführung (47) verlagerbar ist.

8. Vorrichtung nach einem oder mehreren der vorhergehenden Ansprüche, dadurch gekennzeichnet, daß die Hebelverschwenkung die Drehbewegung eines Steuerhebels (50) für eine Unterwerkzeugverlagerung steuert, wobei ein Arm (56) eines Übertragungshebels (57) eine Steuerkurve (54) des Steuerhebels (50) abtastet.

9. Vorrichtung nach einem oder mehreren der vorhergehenden Ansprüche, dadurch gekennzeichnet, daß die Aufwärtsbewegung des Unterwerkzeugs (5) etwa mit dem Aufsetzen der Haltezange (18) auf die Textilie (11) einsetzt und vor dem Erreichen der untersten Stellung des Stößels (24) beendet ist.

10. Vorrichtung nach einem oder mehreren der vorhergehenden Ansprüche, dadurch gekennzeichnet, daß der Aufwärtsbewegung des Unterwerkzeuges (5) etwa zeitgleich mit dem Stillsetzen von Haltezange (18) und Stößel (24) eine Aufwärtspositionierbewegung des Unterwerkzeuges (5) vorgeordnet ist.

11. Vorrichtung nach einem oder mehreren der vorhergehenden Ansprüche, dadurch gekennzeichnet, daß das Unterwerkzeug (5) nach unten über den Übertragungshebel (57) abgefedert ist.

12. Vorrichtung nach einem oder mehreren der vorhergehenden Ansprüche, dadurch gekennzeichnet, daß die Haltezange (18) mit einem Gleitstück (23) axial verschieblich auf dem Stößel (24) sitzt.

## Claims

1. Device for applying rivets, studs or the like which consist of an article lower portion and an article upper portion (7, 10), to a textile or the like, with a bottom tool (5) serving as a support for the article lower portion (7) and a ram (24) which performs the riveting stroke and whose lower end forms an upper tool (28) acting on the article upper portion (10) and whose upper end cooperates with a rotationally driven cam plate controlling the reciprocating movement, and with a holding gripper (18) which is displaceable in the direction of movement of the ram and which stops in a position at a distance from the bottom tool after a first lowering movement to form a finger-protecting position, wherein during this first lowering movement an electrical switch (31) is activated, whose operation stops the device in case of not reaching the distance position, and wherein after reaching the distance position the subsequent second lowering movement of the holding gripper begins, characterised in that the ram (24) which stops for a short time between the first and second lowering movements entrains the holding gripper (18) with identical movement over the whole of its downward path, wherein the holding gripper (18) is coupled to the ram (24) in a unidirectional free motion relative to the ram (24) against the force of a spring (26), which spring (26) together with a relative movement between ram (24) and holding gripper (18) and switch actuation is tensioned either when the holding gripper (18) is applied to the textile (11) or on release of the finger-protecting function.

2. Device according to claim 1, characterised in that the contacts (30, 32) of the switch (31) which is constructed as a contact breaker are associated on the one hand with the holding gripper (18) and on the other hand with the ram (24).

3. Device according to claim 1, characterised in that the spring (26) is constructed as a helical compression spring surrounding the ram (24).

4. Device according to one or more of the preceding claims, characterised in that the distance position which is provided between the two lowering movements extends over about 30° during a 360° rotation per movement cycle of the cam plate (37).

5. Device according to one or more of the preceding claims, characterised by a bridging switch (66) on the machine frame side, which is actuated by the ram (24) at the beginning of the second lowering movement.

6. Device according to one or more of the preceding claims, characterised by a slide displacement of a loading slide (15), which is picked up by the ram movement.

7. Device according to claim 6, characterised in that the slide displacement takes place by means of a lever (43) which in a connecting link slot (45) guides a connecting link block (46) which is in turn displaceable in a carriage guide (47) on the machine frame side.

8. Device according to one or more of the preceding claims, characterised in that pivoting of the lever controls the rotary movement of a control lever (50) for bottom tool displacement, wherein an arm (56) of a transmission lever (57) senses a control cam (54) of the control lever (50).

9. Device according to one or more of the preceding claims, characterised in that the upward movement of the bottom tool (5) begins approximately with application of the holding gripper (18) to the textile (11) and is over before reaching the bottom position of the ram (24).

10. Device according to one or more of the preceding claims, characterised in that before the upward movement of the bottom tool (5) approximately at the same time as stopping of holding gripper (18) and ram (24) is an upward positioning movement of the bottom tool (5).

11. Device according to one or more of the preceding claims, characterised in that the bottom tool (5) is downwardly spring-loaded by the transmission lever (57).

12. Device according to one or more of the preceding claims, characterised in that the holding gripper (18) is seated axially slidably with a slide piece (23) on the ram (24)

## Revendications

1. Dispositif pour poser des rivets, des boutons ou similaire, constitués d'une partie inférieure d'article et d'une partie supérieure d'article (7, 10), sur un textile ou similaire, avec un outil inférieur (5), servant de contre-appui pour la partie inférieure d'article (7), et un poussoir (24) effectuant la course de rivetage, et dont l'extrémité inférieure constitue l'outil supérieur (28) actionnant la partie supérieure d'article (10) et dont l'extrémité supérieure coopère avec un disque de came entraîné en rotation, contrôlant le déplacement de course et d'une pince de maintien (18) déplaçable dans la direction de déplacement du poussoir, qui reste immobilisée pour constituer une position de protection des doigts après avoir parcouru un premier déplacement d'abaissement, dans une position d'espacement par rapport à l'outil inférieur, dans lequel dispositif pendant ce premier déplacement d'abaissement, est activé un interrupteur électrique (31) dont l'actionnement, dans le cas où l'on n'atteint pas la position d'espacement, met le dispositif à l'arrêt et où, après avoir atteint la position d'espacement, il met en oeuvre le deuxième déplacement d'abaissement subséquent de la pince de maintien, caractérisé en ce que le poussoir (24) restant stationnaire pendant une courte durée, entre un premier et un deuxième déplacements d'abaissement, entraîne avec lui la pince de maintien (18), de façon cinématiquement identique, sur la totalité de sa course de descente, la pince de maintien (18) étant couplée au poussoir (24), dans un mécanisme à déplacement libre dans une seule direction par rapport au poussoir (24), à l'encontre de la force d'un ressort (26), le ressort (26) étant serré du fait d'un déplacement relatif entre le poussoir (24) et la pince de maintien (18) et du fait d'un actionnement d'interrupteur, soit lors de l'application de la pince de maintien (18) sur le textile (11), soit lors du déclenchement de la fonction de protection des doigts.

2. Dispositif selon la revendication 1, caractérisé en ce que les contacts (30, 32) de l'interrupteur (31) réalisé comme organe d'interruption sont associés, d'une part, à la pince de maintien (18) et, d'autre part, au poussoir (24).

3. Dispositif selon la revendication 1, caractérisé en ce que le ressort (26) est réalisé sous la forme d'un ressort de compression hélicoïdale entourant le poussoir (24).

4. Dispositif selon l'une ou plusieurs des revendications précédentes caractérisé en ce que la position d'espacement prévue entre les deux déplacements d'abaissement s'étend sur environ 30°, pour une rotation de 360° par cycle de déplacement du disque de came (37).

5. Dispositif selon l'une ou plusieurs des revendications précédentes caractérisé par un interrupteur de pontage (66), situé du côté du bâti de la machine et qui est actionné par le poussoir (24) au début du deuxième déplacement d'abaissement.

6. Dispositif selon l'une ou plusieurs des revendications précédentes caractérisé par un déplacement de coulisseau, dérivé du déplacement du poussoir, d'un coulisseau de chargement (15).

7. Dispositif selon la revendication 6 caractérisé en ce que le déplacement de coulisseau s'effectue au moyen d'un levier (43) qui guide dans une fente de coulisse (45) un patin de coulisse (46), qui est déplaçable de son côté dans un guidage de chariot (47) situé du côté du bâti de la machine.

8. Dispositif selon l'une ou plusieurs des revendications précédentes caractérisé en ce que le pivotement du levier commande le déplacement rotatif d'un levier de commande (50) destiné à produire un déplacement de l'outil inférieur, un bras (56) d'un levier de transmission (57) palpant une came de commande (54) du levier de commande (50).

9. Dispositif selon l'une ou plusieurs des revendications précédentes, caractérisé en ce que le déplacement de montée de l'outil inférieur (5) est mis en oeuvre pour l'essentiel lors de la pose de la pince de maintien (18) sur le textile (11) et est achevé avant d'atteindre la position la plus basse du poussoir (24).

10. Dispositif selon l'une ou plusieurs des revendications précédentes, caractérisé en ce que le déplacement de positionnement de levée de l'outil inférieur (5) est effectué, avant le déplacement de levée de l'outil inférieur (5), pour l'essentiel simultanément avec la mise à l'arrêt de la pince de maintien (18) et du poussoir (24).

11. Dispositif selon l'une ou plusieurs des revendications précédentes, caractérisé en ce que l'outil inférieur (5) est suspendu élastiquement vers le bas par l'intermédiaire du levier de transmission (57).

12. dispositif selon l'une ou plusieurs des revendications précédentes, caractérisé en ce que la pince de maintien (18) est montée avec une pièce de glissement (23) déplaçable axialement sur le poussoir (24).
